(19) Europäisches Patentamt
European Patent Office
Office européen des brevets

(11) **EP 2 400 650 A2**

(12) **EUROPEAN PATENT APPLICATION**

(43) Date of publication:
**28.12.2011 Bulletin 2011/52**

(51) Int Cl.:
**H02M 7/48** (2007.01)

(21) Application number: **11156616.2**

(22) Date of filing: **02.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.06.2010 JP 2010141714**

(71) Applicant: **Kabushiki Kaisha Yaskawa Denki Kitakyushu-shi, Fukuoka 806-0004 (JP)**

(72) Inventors:
• **Ishii, Sadao**
  **Kitakyushu-Shi Fukuoka 806-0004 (JP)**
• **Kawachi, Tomohiro**
  **Kitakyushu-Shi Fukuoka 806-0004 (JP)**
• **Ihara, Yutaro**
  **Kitakyushu-Shi Fukuoka 806-0004 (JP)**
• **Higuchi, Tsuyoshi**
  **Kitakyushu-Shi Fukuoka 806-0004 (JP)**

(74) Representative: **Gendron, Vincent Christian et al S.A. Fedit-Loriot
38, avenue Hoche
75008 Paris (FR)**

(54) **DC-AC Power Converter**

(57)    This DC-AC power converter includes a switch distribution means (16) distributing and outputting a step-down control signal and a step-up control signal as switch control signals for corresponding prescribed bidirectional switches (4) respectively on the basis of a polarity determination signal for an alternating voltage command in one cycle of the alternating voltage command.

*FIG.1*

FIRST EMBODIMENT

**Description**

BACKGROUND OF THE INVENTION

Field of the Invention

The present invention relates to a DC-AC power converter.

Description of the Background Art

A matrix converter (DC-AC power converter) including a power conversion portion performing power conversion from direct current to alternating current is known in general.

WO2006/112275 discloses a matrix converter including a DC power supply, a plurality of input-side reactors connected to the DC power supply, a bidirectional switch group (power conversion portion) connected to the plurality of input-side reactors and a plurality of output-side reactors connected to the bidirectional switch group. The output-side reactors are connected to a motor. In this matrix converter, a first capacitor group is connected between the output-side reactors and the bidirectional switch group, while a second capacitor group is connected between the input-side reactors and the bidirectional switch group.

The matrix converter disclosed in WO2006/112275 turns on prescribed bidirectional switches included in the bidirectional switch group thereby short-circuiting each input-side reactor and storing magnetic energy in the reactor. Thereafter the matrix converter turns off the bidirectional switch employed for short-circuiting the reactor, so that the magnetic energy stored in the reactor is stored in the first capacitor group provided between the output-side reactors and the bidirectional switch group. Thus, the voltage of the DC power supply is stepped up, and input in the motor. The matrix converter can also step down the voltage of the DC power supply and input the same in the motor by changing the ON- and OFF-states of the bidirectional switch included in the bidirectional switch group. The matrix converter disclosed in WO2006/112275 is formed to perform the aforementioned step-up or step-down operation in response to a result obtained by comparing the voltage of the DC power supply with the voltage output to the motor.

However, the matrix converter disclosed in the aforementioned WO2006/112275 compares the voltage of the DC power supply with desired voltage output to the motor and selects the step-up or step-down operation in response to the result of the comparison, and hence it takes time to compare the voltage of the DC power supply with the desired voltage output to the motor. Further, the matrix converter performs neither step-up nor step-down operation during the comparison, and hence switching from the step-up operation to the step-down operation or vice versa is discontinuous. Therefore, awaited is an improvement for more stably supplying power from the DC power supply to the motor.

SUMMARY OF THE INVENTION

The present invention has been proposed in order to solve the aforementioned problem, and an object of the present invention is to provide a DC-AC power converter capable of stably supplying power from a DC power supply.

In order to attain the aforementioned object, a DC-AC power converter according to an aspect of the present invention includes a power conversion portion, including a DC power supply, a plurality of bidirectional switches and a DC reactor arranged between the DC power supply and the bidirectional switches, for performing DC-AC power conversion, an alternating voltage command output means outputting an alternating voltage command, a step-down control signal generation means generating a step-down control signal on the basis of the alternating voltage command and direct voltage of the DC power supply, a step-up control signal generation means generating a step-up control signal on the basis of the alternating voltage command and the direct voltage of the DC power supply, and a switch distribution means distributing and outputting the step-down control signal and the step-up control signal as switch control signals for corresponding prescribed bidirectional switches respectively on the basis of a polarity determination signal for the alternating voltage command in one cycle of the alternating voltage command.

In the DC-AC power converter according to the aspect of the present invention, as hereinabove described, the switch distribution means distributes and outputs the step-down control signal and the step-up control signal as the switch control signals for the corresponding prescribed bidirectional switches respectively on the basis of the polarity determination signal for the alternating voltage command in one cycle of the alternating voltage command so that both of the step-down control signal and the step-up control signal are distributed to the switch control signals for the corresponding prescribed bidirectional switches respectively regardless of the polarity (step-down or step-up) of the alternating voltage command in one cycle of the alternating voltage command, whereby the DC-AC power converter can smoothly switch the operation thereof from a step-up operation to a step-down operation or vice versa. Thus, interruption of supply of power from the DC power supply is suppressed in the switching from the step-up operation to the step-down operation or vice versa, whereby the DC-AC power converter can stably supply power from the DC power supply.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a circuit diagram showing the overall structure of a DC-AC power converter according to a first embodiment of the present invention;
Fig. 2 is a circuit diagram of a bidirectional switch of the DC-AC power converter according to the first embodiment of the present invention;
Fig. 3 is a block diagram of a control block of the DC-AC power converter according to the first embodiment of the present invention;
Fig. 4 is a circuit diagram showing a specific example of a switch distribution means included in the control block of the DC-AC power converter according to the first embodiment of the present invention;
Fig. 5 is a diagram for illustrating an operation in a positive step-down mode of the DC-AC power converter according to the first embodiment of the present invention;
Fig. 6 is a diagram for illustrating an operation in a positive step-up mode of the DC-AC power converter according to the first embodiment of the present invention;
Fig. 7 is a diagram for illustrating an operation in a negative step-down mode of the DC-AC power converter according to the first embodiment of the present invention;
Fig. 8 is a diagram for illustrating an operation in a negative step-up mode of the DC-AC power converter according to the first embodiment of the present invention;
Fig. 9 is a diagram for illustrating an operation in one cycle of alternating voltage of the DC-AC power converter according to the first embodiment of the present invention;
Fig. 10 is a circuit diagram showing the overall structure of a DC-AC power converter according to a second embodiment of the present invention;
Fig. 11 is a block diagram of a control block of the DC-AC power converter according to the second embodiment of the present invention;
Fig. 12 is a detailed block diagram of the control block of the DC-AC power converter according to the second embodiment of the present invention;
Fig. 13 is a circuit diagram showing the overall structure of a DC-AC power converter according to a third embodiment of the present invention;
Fig. 14 is a block diagram of a control block of the DC-AC power converter according to the third embodiment of the present invention;
Fig. 15 is a detailed block diagram of the control block of the DC-AC power converter according to the third embodiment of the present invention;
Fig. 16 is a circuit diagram showing the overall structure of a DC-AC power converter according to a fourth embodiment of the present invention; and
Fig. 17 is a block diagram of a control block of the DC-AC power converter according to the fourth embodiment of the present invention.

DESCRIPTION OF THE PREFERRED EMBODIMENTS

Embodiments of the present invention are now described with reference to the drawings.

(First Embodiment)

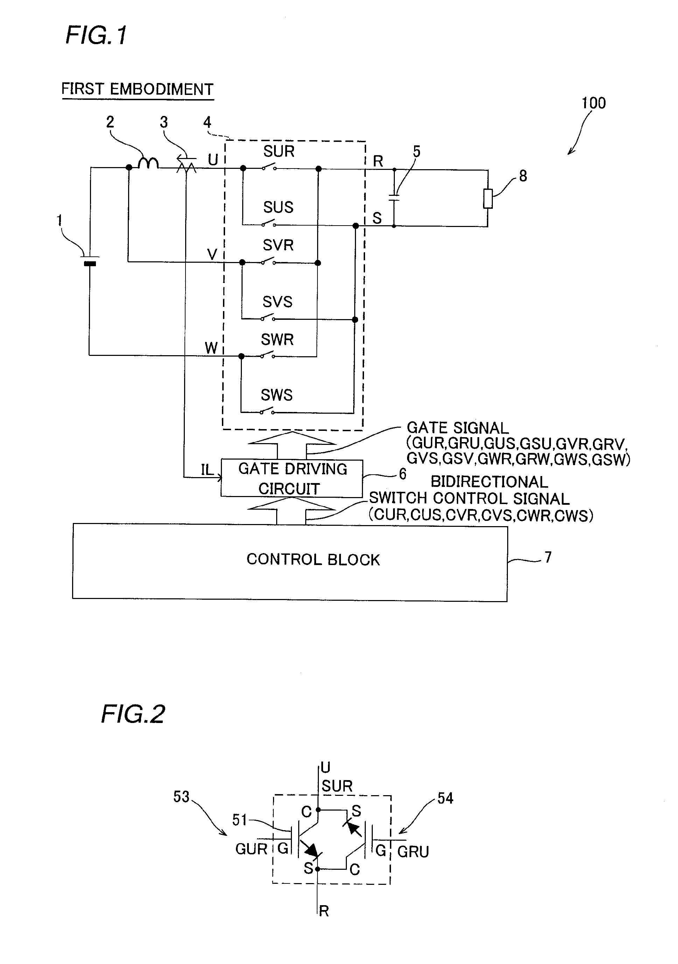

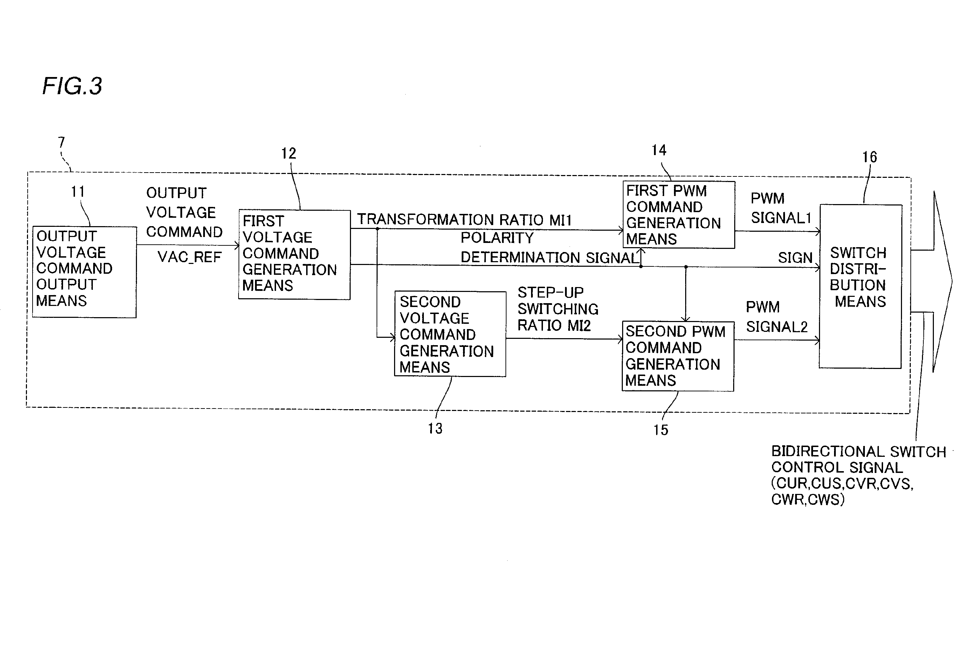

First, the structure of a DC-AC power converter 100 according to a first embodiment of the present invention is schematically described with reference to Figs. 1 to 4.
As shown in Fig. 1, the DC-AC power converter 100 includes a DC power supply 1, a DC reactor 2, a current detector 3, a bidirectional switch group 4, a filter capacitor 5, a gate driving circuit 6 and a control block 7. A load 8 is connected to an output side (filter capacitor 5) of the bidirectional switch group 4. The bidirectional switch group 4 and the DC reactor 2 are examples of the "power conversion portion" in the present invention. As shown in Fig. 2, a bidirectional switch SUR is constituted of directional switches 53 and 54 formed by reverse-blocking IGBTs 51, and so formed that insulated gate signals GUR and GRU described later are input in the gates of the reverse-blocking IGBTs 51 respectively.
As shown in Fig. 3, the control block 7 includes an output voltage command output means 11, a first voltage command generation means 12, a second voltage command generation means 13, a first PWM command generation means 14, a second PWM command generation means 15 and a switch distribution means 16. The output voltage command output means 11 is an example of the "alternating voltage command output means" or the "output voltage command generation means" in the present invention. The first voltage command generation means 12 is an example of the "step-down control signal generation means" or the "step-up control signal generation means" in the present invention, and the second voltage command generation means 13 is an example of the "step-up control signal generation means" in the present invention. The first PWM command generation means 14 is an example of the "step-down control signal generation means" or the "step-down PWM control signal generation means" in the present invention. The second PWM command generation means 15 is an example of the "step-up control signal generation means" or the "step-up PWM control signal generation means" in the present invention.

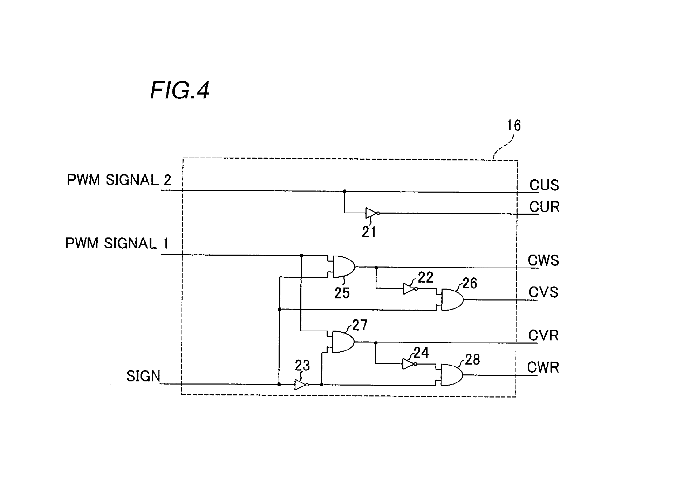

As shown in Fig. 4, the switch distribution means 16 includes four inversion circuits 21, 22, 23 and 24 and four AND circuits 25, 26, 27 and 28.

Operations of the DC-AC power converter 100 are now schematically described with reference to Figs. 1 and 3.

In the DC-AC power converter 100, direct voltage supplied from the DC power supply 1 is stepped up or stepped down and supplied to the load 8 through the bidirectional switch group 4, as shown in Fig. 1. More specifically, the control block 7 generates a PWM signal 1 for the step-down operation and a PWM signal 2 for the step-up operation on the basis of a transformation ratio MI1, while the switch distribution means 16 distributes and outputs the PWM signal 1 for the step-down operation and the PWM signal 2 for the step-up operation to bidirectional switch control signals for corresponding prescribed bidirectional switches respectively. Thus, the DC-AC power converter 100 on-off controls each bidirectional switch of the bidirectional switch group 4, to step down or step up the direct voltage supplied from the DC power supply 1 to a prescribed level. The switch distribution means 16 is regularly supplied with the PWM signal 1 for the step-down operation and the PWM signal 2 for the step-up operation, so that step-down and step-up operations are smoothly switched. The operations are more detailedly described after the following detailed description of the structure.

The structure of the DC-AC power converter 100 according to the first embodiment of the present invention is now described in detail with reference to Figs. 1 to 4.

As shown in Fig. 1, the bidirectional switch group 4 includes six bidirectional switches SUR, SUS, SVR, SVS, SWR and SWS. The positive pole of the DC power supply 1 is connected to the bidirectional switches SVR and SVS, and electrically connected to the bidirectional switches SUR and SUS through the DC reactor 2 and the current detector 3. The negative pole of the DC power supply 1 is connected to the bidirectional switches SWR and SWS. The bidirectional switches SUR, SVR and SWR are connected to an electrode of the filter capacitor 5. The bidirectional switches SUS, SVS and SWS are connected to another electrode of the filter capacitor 5.

As shown in Fig. 2, the bidirectional switch SUR has the directional switches 53 and 54 having the reverse-blocking IGBTs 51. The directional switch 53 is so formed that the insulated gate signal GUR described later is input in the gate of the IGBT 51 thereof. Further, the directional switch 54 is so formed that the insulated gate signal GRU described later is input in the gate of the IGBT 51 thereof. The bidirectional switches SUS, SVR, SVS, SWR and SWS also have directional switches 53 and 54, similarly to the bidirectional switch SUR.

The DC power supply 1 is a power storage element, which generates the direct voltage. According to the first embodiment, the DC power supply 1 is assumed to be a storage battery. If the DC power supply 1 is formed by a lead storage battery, the direct voltage of the lead storage battery is about at least 12 V and not more than 24 V. If the DC power supply 1 is formed by a storage battery, further, the quantity of storage is reduced after the DC power supply 1 supplies power for a constant period. Therefore, the DC power supply 1 must be charged.

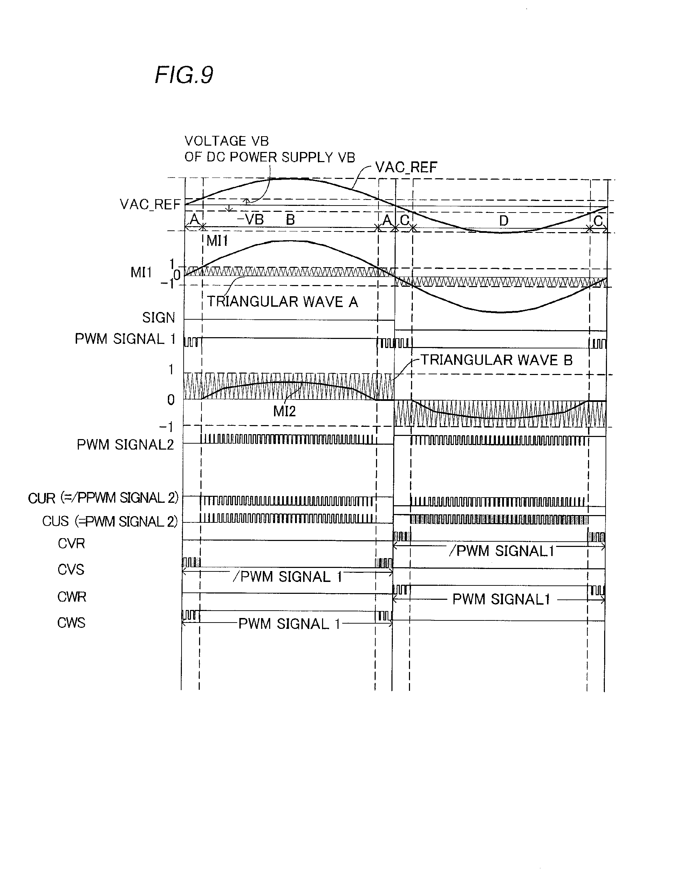

The load 8 requires single-phase AC power, for example. If a commercial power supply (AC power supply) is applied to the load 8 for charging the DC power supply 1, the commercial power supply supplies alternating current of 100 V or 200 V having a frequency of 50 Hz or 60 Hz. Thus, the DC-AC power converter 100 is formed to be capable of bidirectionally performing power conversion between the direct voltage from the DC power supply 1 and single-phase alternating voltage of the load 8. If the amplitude of the single-phase alternating voltage is greater than that of the direct voltage, the absolute value of an instantaneous value of the single-phase alternating voltage may be greater than or less than the direct voltage in one cycle. The direct voltage of the DC power supply 1 must be stepped up if the same is less than the single-phase alternating voltage, and must be stepped down if the same is greater than the single-phase alternating voltage. Therefore, a positive step-down mode (period A), a positive step-up mode (period B), a negative step-down mode (period C) and a negative step-up mode (period D) are required in one cycle in which the DC power supply 1 outputs the alternating voltage to the load 8 as shown in Fig. 9, as described later.

The DC reactor 2 has a function of suppressing current to the filter capacitor 5 in the step-down modes (periods A and C), and functions as a constant current supply for step-up operations in the step-up modes (periods B and D).

The current detector 3 has a function of detecting the polarity of the current flowing in the DC reactor 2, and is so formed that an output IL thereof is input in the gate driving circuit 6. The polarity of the current flowing in the DC reactor 2 is employed for controlling the bidirectional switches SUR, SUS, SVR, SVS, SWR and SWS.

The bidirectional switch group 4 is formed to output desired voltage to the load 8 when the IGBTs 51 of the bidirectional switches SUR, SUS, SVR, SVS, SWS and SWS are on-off controlled by insulated gate signals GUR, GRU, GUS, GSU, GVR, GRV, GVS, GSV, GWR, GRW, GWS and GWS output from the gate driving circuit 6.

The gate driving circuit 6 is formed to detect the polarity of the output IL from the current detector 3, to add delay times to bidirectional switch control signals CUR, CUS, CVR, CVS, CWR and CWS output from the control block 7 and to generate the gate signals GUR, GRU, GUS, GSU, GVR, GRV, GVS, GSV, GWR, GRW, GWS and GWS insulated from the bidirectional switch control signals CUR, CUS, CVR, CVS, CWR and CWS on the basis of the detected polarity.

The filter capacitor 5 has functions of smoothing ripples of the voltage in the step-down modes (periods A and C) and leveling pulse current output from the bidirectional switch group 4 in the step-up modes (periods B and D).

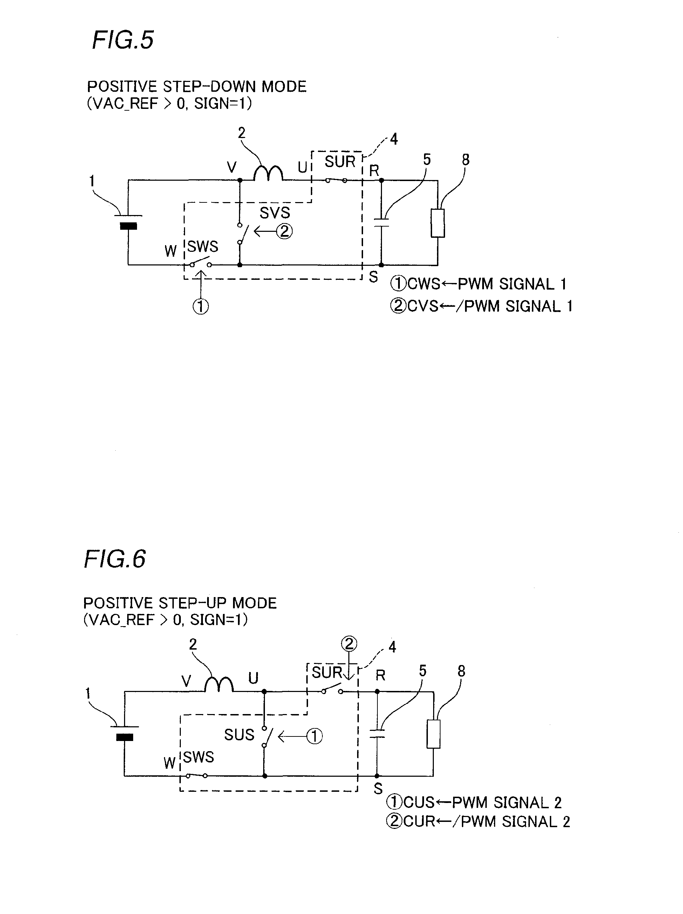

The step-up and step-down operations of the DC-AC power converter 100 are now described in detail with reference to Figs. 5 to 8.

In order to convert the direct voltage of at least 12 V and not more than 24 V to alternating voltage of 100 V or 200 V having a frequency of 50 Hz or 60 Hz, the DC-AC power converter 100 must perform operations in four modes, i.e., the positive step-down mode, the positive step-up mode, the negative step-down mode and the negative step-up mode in this order in one cycle of the alternating voltage, as described above. In this case, the DC-AC power converter 100 sets the rated voltage (direct voltage of at least 12 V and not more than 24 V) of the storage battery, the RMS value $V_0^*$ (100 V or 200 V) of the alternating voltage and the frequency $f_o^*$ of the alternating voltage with respect to the control block 7 with a setting tool (not shown). The control block 7 assumes direct voltage VDC_REF as the rated voltage of the storage battery from these set values, and decides an output voltage command VAC_REF as follows:

$$\text{VAC\_REF} = V_{OP}^* \cos\omega_0^* t = \sqrt{2} V_0^* \cos 2\pi f_0^* t \ \ldots \ (1)$$

where $V_{OP}^*$ represents a peak command of the alternating voltage, and $\omega_0^*$ represents an angular frequency command.

The respective modes are now described in detail.

(Positive Step-Down Mode)

When the polarity of the output voltage command VAC_REF output from the output voltage command output means 11 is positive and the DC-AC power converter 100 is in the step-down mode (period A: see Fig. 9), the bidirectional switch SUR included in the bidirectional switch group 4 is regularly kept in an ON-state while the bidirectional switches SWS and SVS are alternately on-off controlled, as shown in Fig. 5. Fig. 5 omits the remaining three bidirectional switches SUS, SVR and SWR, which are regularly in OFF-states. The ON/OFF ratio of the bidirectional switch SWS is decided by the ratio between the output voltage command VAC_REF and the direct voltage VDC_REF of the DC power supply 1. In a PWM system, the ON/OFF ratio in a certain constant cycle is controlled. Assuming that Tc represents the constant cycle, Ton represents the ON period and Toff represents the OFF period, the transformation ratio MI1 is expressed as follows:

$$\text{MI1} = \text{Ton/TC} = \text{VAC\_REF/VDC\_REF} \ \ldots \ (2)$$

When the bidirectional switches SVS and SWS are in OFF- and ON-states respectively (state A1), current flows from the DC power supply 1 through the DC reactor 2, the load 8 and the bidirectional switch SWS. When the bidirectional switches SVS and SWS are in ON- and OFF-states respectively (state A2), on the other hand, current flows from the DC reactor 2 through the bidirectional switch SUR, the load 8 and the bidirectional switch SVS. The DC-AC power converter 100 repeats the states A1 and A1 by on-off controlling the bidirectional switches SVS and SWS, thereby stepping down voltage VB of the DC power supply 1 and applying the same to the load 8.

(Positive Step-Up Mode)

When the polarity of the output voltage command VAC_REF output from the output voltage command output means 11 is positive and the DC-AC power converter 100 is in the step-up mode (period B: see Fig. 9), the bidirectional switch SWS included in the bidirectional switch group 4 is regularly kept in an ON-state while the bidirectional switches SUS and SUR are alternately on-off controlled, as shown in Fig. 6. Fig. 6 omits the remaining three bidirectional switches SVR, SVS and SWR, which are regularly in OFF-states. The ON/OFF ratio of the bidirectional switch SUS is decided by the ratio between the output voltage command VAC_REF and the voltage VB of the DC power supply 1. With the transformation ratio MI1 employed in the aforementioned step-down mode, a step-up switching ratio MI2 is expressed as follows:

$$MI2 = Ton/TC = 1 - 1/MI1 \dots (3)$$

When the bidirectional switches SUS and SUR are in OFF- and ON-states respectively (state B1), current flows from the DC power supply 1 through the DC reactor 2, the bidirectional switch SUR, the load 8 and the bidirectional switch SWS. When the bidirectional switches SUS and SUR are in ON- and OFF-states respectively (state B2), on the other hand, current flows from the DC power supply 1 through the DC reactor 2 and the bidirectional switches SUS and SWS. The DC-AC power converter 100 repeats the states B1 and B2 by on-off controlling the bidirectional switches SUS and SUR, thereby stepping up the voltage VB of the DC power supply 1 and applying the same to the load 8.

(Negative Step-Down Mode)

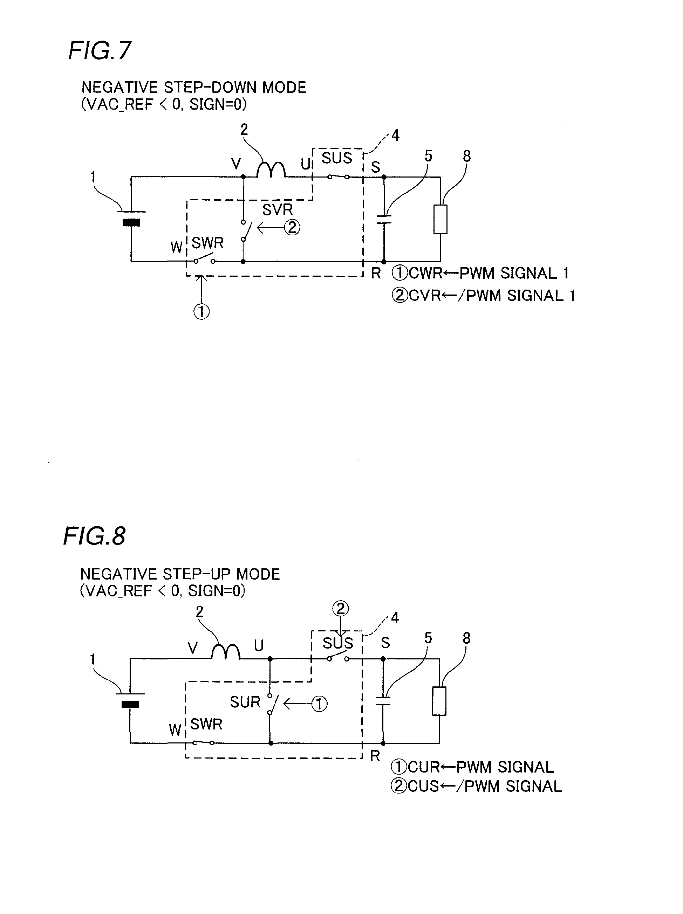

When the polarity of the output voltage command VAC_REF output from the output voltage command output means 11 is negative and the DC-AC power converter 100 is in the step-down mode (period C: see Fig. 9), the bidirectional switch SUS included in the bidirectional switch group 4 is regularly kept in an ON-state while the bidirectional switches SWR and SVR are alternately on-off controlled, as shown in Fig. 7. Fig. 7 omits the remaining three bidirectional switches SUR, SVS and SWS, which are regularly in OFF-states. The ON/OFF ratio of the bidirectional switch SWR is decided by the ratio between the output voltage command VAC_REF and the voltage VB of the DC power supply 1. The transformation ratio MI1 is expressed in the above equation (2).

When the bidirectional switches SVR and SWR are in OFF- and ON- states respectively (state C1), current flows from the DC power supply 1 through the DC reactor 2, the bidirectional switch SUS, the load 8 and the bidirectional switch SWR. When the bidirectional switches SVR and SWR are in ON- and OFF-states respectively (state C2), on the other hand, current flows from the DC reactor 2 through the bidirectional switch SUS, the load 8 and the bidirectional switch SVR. The DC-AC power converter 100 repeats the states C1 and C2 by on-off controlling the bidirectional switches SVR and SWR, thereby stepping down the voltage VB of the DC power supply 1 and applying the same to the load 8.

(Negative Step-Up Mode)

When the polarity of the output voltage command VAC_REF output from the output voltage command output means 11 is negative and the DC-AC power converter 100 is in the step-up mode (period D: see Fig. 9), the bidirectional switch SWR included in the bidirectional switch group 4 is regularly kept in an ON-state while the bidirectional switches SUR and SUS are alternately on-off controlled, as shown in Fig. 8. Fig. 8 omits the remaining three bidirectional switches SVR, SVS and SWS, which are regularly in OFF-states. The ON/OFF ratio of the bidirectional switch SUR is expressed in the above equation (3).

When the bidirectional switches SUR and SUS are in OFF- and ON-states respectively (state D1), current flows from the DC power supply 1 through the DC reactor 2, the bidirectional switch SUS, the load 8 and the bidirectional switch SWR. When the bidirectional switches SUR and SUS are in ON- and OFF-states respectively (state D2), on the other hand, current flows from the DC power supply 1 through the DC reactor 2 and the bidirectional switches SUR and SWR. The DC-AC power converter 100 repeats the states D1 and D2 by on-off controlling the bidirectional switches SUR and SUS, thereby stepping up the voltage VB of the DC power supply 1 and applying the same to the load 8.

Operations of the control block 7 are now described in detail with reference to Fig. 3.

As shown in Fig. 3, the output voltage command output means 11 generates the desired output voltage command VAC_REF. When the DC power supply 1 discharges to the load 8, the output voltage command output means 11 generates the output voltage command VAC_REF through an operation according to the equation (1). When the load 8 formed by a commercial power supply (AC power supply) charges the DC power supply 1, a circuit for controlling current is separately provided outside the control block 7.

The first voltage command generating means 12 calculates the transformation ratio MI1 expressed in the above equation (2) from the ratio between the output voltage command VAC_REF and the voltage VB of the DC power supply 1, and outputs the same. Further, the first voltage command generating means 12 outputs a polarity determination signal SIGN, which is a logical symbol expressing the polarity (positive or negative) of the output voltage command VAC_REF. The polarity determination signal SIGN is at a high level if the polarity of the output voltage command VAC_REF is positive, and at a low level if the polarity is negative.

The second voltage command generation means 13 calculates the step-up switching ratio MI2 expressed in the above equation (3) from the transformation ratio MI1, and outputs the same. The transformation ratio MI1 is set to 1 if the same is less than 1, so that the transformation ratio MI1 is not less than 1 (so that the step-up switching ratio MI2 is not negative). In other words, the step-up switching ratio MI2 is fixed to 0 if the transformation ratio MI1 is not more than 1.

The first PWM command generation means 14 generates a PWM signal 1 for the step-down operation having a time width Ton1 of a high level on the basis of the transformation ratio MI1.

In the first embodiment, the first PWM command generation means 14 generates the PWM signal 1 according to triangular wave comparison, as shown in Fig. 9. In the triangular wave comparison, the first PWM command generation means 14 employs a triangular wave having a cycle time Tc which is less than one cycle time of the single-phase alternating voltage and not more than 1 msec. in general, to decide the time width Ton1 with respect to the cycle time Tc as follows:

$$Ton1 = MI1 \times Tc \ … \ (4)$$

The second PWM command generation means 15 generates a PWM signal 2 for the step-up operation having the following time width Ton2 with respect to the cycle time Tc of the triangular wave on the basis of the step-up switching ratio MI2:

$$Ton2 = MI2 \times Tc \ … \ (5)$$

In the first embodiment, the second PWM command generation means 15 generates the PWM signal 2 according to triangular wave comparison, as shown in Fig. 9.

The switch distribution means 16 distributes and outputs the PWM signal 1 to the bidirectional switch control signals CVR, CVS, CWR and CWS on the basis of the polarity determination signal SIGN. Further, the switch distribution means 16 distributes and outputs the PWM signal 2 to the bidirectional switch control signals CUR and CUS, regardless of the polarity determination signal SIGN.

Specific operations of generating the aforementioned PWM signal 1 for the step-down operation and the aforementioned PWM signal 2 for the step-up operation are now described in detail with reference to Figs. 3 and 9.

As shown in Fig. 3, the first voltage command generation means 12 normalizes the desired output voltage command VAC_REF generated by the output voltage command output means 11 with the voltage VB of the DC power supply 1 (refer to the above equation (2)), and calculates the transformation ratio MI1. As shown in Fig. 9, the first PWM command generation means 14 compares the transformation ratio MI1 with a triangular wave A, and generates the PWM signal 1. The triangular wave A has a maximum value 1 and a minimum value -1. The PWM signal 1 is at a high level if the transformation ratio MI1 is greater than the triangular wave A, and at a low level if the transformation ratio MI1 is less than the triangular wave A. Thus, the PWM signal 1 is regularly at a high level in the period B (positive step-up mode, MI1 > 1), and regularly at a low level in the period D (negative step-up mode, MI1 < -1).

As shown in Fig. 3, the second voltage command generation means 13 calculates the step-up switching ratio MI2 on the basis of the above equation (3), and outputs the same. If the transformation ratio MI1 is not more than 1 (positive step-down mode (period A) and negative step-down mode (period C)), the step-up switching ratio MI2 is fixed to 0 and output, as shown in Fig. 9. Then, the second PWM command generation means 15 compares the step-up switching ratio MI2 with a triangular wave B, and generates the PWM signal 2. The PWM signal 2 is at a high level if the step-up switching ratio MI2 is greater than the triangular wave B, and at a low level if the step-up switching ratio MI2 is not more than the triangular wave B.

According to the first embodiment, the PWM signals 1 and 2 are input in the switch distribution means 16, which in turn generates /PWM signals 1 and 2, i.e., inversion signals of the PWM signals 1 and 2. When the polarity of the output voltage command VAC_REF is positive (polarity determination signal SIGN is at a high level) (periods A and B), the PWM signal 1 and the /PWM signal 1 are distributed to the bidirectional switch control signals CWS and CVS (see Figs. 5 and 6) respectively. At this time, the bidirectional switch control signals CWR and CVR are at low levels. When the polarity of the output voltage command VAC_REF is negative (polarity determination signal SIGN = 0) (periods C and D), the PWM signal 1 and the /PWM signal 1 are distributed to the bidirectional switch control signals CWR and CVR (see Figs. 7 and 8) respectively. At this time, the bidirectional switch control signals CWS and CVS are at low levels.

According to the first embodiment, the PWM signal 2 and the /PWM signal 2 are distributed to the bidirectional switch control signals CUS and CUR respectively in all of the periods A, B, C and D, regardless of the polarity of the output voltage command VAC_REF.

The operation of the switch distribution means 16 distributing the aforementioned PWM signal 1 for the step-down operation and the aforementioned PWM 2 for the step-up operation is now described in detail with reference to Fig. 4.

As shown in Fig. 4, the switch distribution means 16 outputs the PWM signal 2 received therein directly as the bidirectional switch control signal CUS, and outputs the same as the bidirectional switch control signal CUR through the inversion circuit 21. The PWM signal 1 and the polarity determination signal SIGN are input in the AND circuit 25, which in turn outputs the bidirectional switch control signal CWS. A signal obtained by inverting the output of the AND circuit 25 through the inversion circuit 22 and the polarity determination signal SIGN are input in the AND circuit 26, and output as the bidirectional switch control signal CVS. The PWM signal 1 and a signal obtained by inverting the polarity determination signal SIGN through the inversion circuit 23 are input in the AND circuit 27, and output as the bidirectional switch control signal CVR. A signal obtained by inverting the output of the AND circuit 27 through the inversion circuit 24 and a signal obtained by inverting the polarity determination signal SIGN through the inversion circuit 23 are input in the AND circuit 28, and output as the bidirectional switch control signal CWR.

The gate driving circuit 6 shown in Fig. 1 generates the insulated gate signals GUR, GRU, GUS, GSU, GVR, GRV, GVS, GSV, GWR, GRW, GWS and GWS from the aforementioned bidirectional switch control signals CUR, CUS, CVR, CVS, CWR and CWS. The gate driving circuit 6 is provided with a delay circuit for preventing the pairs of IGBTs, causing a short circuit of the DC power supply 1 if tuned on at the same time, from being turned on at the same time when making transition in the ON-states of the bidirectional switches SUR, SUS, SVR, SVS, SWR and SWS (making transition from the state where the bidirectional switch SWS is in an ON-state to the state where the bidirectional switch SVS is in an ON-state in the positive step-down mode, for example), and decides the gate signals GUR, GRU, GUS, GSU, GVR, GRV, GVS, GSV, GWR, GRW, GWS and GWS in consideration of the polarity of the current flowing in the bidirectional switches SUR, SUS, SVR, SVS, SWR and SWS at this time. Commutation control for deciding the operation related to the transition in the ON-states and the operation of the gate driving circuit 6 based thereon can be performed directly through well-known commutation control for a matrix converter, and hence redundant description is omitted.

The insulated gate signals GUR and GRU generated by the gate driving circuit 6 are input in the first and second IGBTs 51 of the bidirectional switch SUR. The insulated gate signals GUS and GSU are input in the first and second IGBTs 51 of the bidirectional switch SUS. The insulated gate signals GVR and GRV are input in the first and second IGBTs 51 of the bidirectional switch SVR. The insulated gate signals GVS and GSV are input in the first and second IGBTs 51 of the bidirectional switch SVS. The insulated gate signals GWR and GRW are input in the first and second IGBTs 51 of the bidirectional switch SWR. The insulated gate signals GWS and GSW are input in the first and second IGBTs 51 of the bidirectional switch SWS. Thus, the DC-AC power converter 100 on-off controls the bidirectional switches SUR, SUS, SVR, SVS, SWR and SWS of the bidirectional switch group 4, and steps down or steps up the voltage VB of the DC power supply 1.

More specifically, the gate signals GUR and GRU are input in the gates of the IGBTs 51 constituting the directional switches 53 and 54 of the bidirectional switch SUR respectively, for example, as shown in Fig. 2.

According to the first embodiment, as hereinabove described, the switch distribution means 16 distributes and outputs the PWM signals 1 and 2 to the bidirectional switch control signals CUR, CUS, CVR, CVS, CWR and CWS with respect to the corresponding prescribed bidirectional switches SUR, SUS, SVR, SVS, SWR and SWS respectively on the basis of only the polarity determination signal SIGN for the output voltage command VAC_REF regardless of the step-up or step-down operation in one cycle of the output voltage command VAC_REF, whereby the DC-AC power converter 100 can smoothly switch the step-up operation to the step-down operation or vice versa. Thus, the DC power supply 1 can stably supply power when the DC-AC power converter 100 switches the step-up operation to the step-down operation or vice versa.

According to the first embodiment, as hereinabove described, the control block 7 regularly generates and outputs the PWM signals 1 and 2 in one cycle of the output voltage command VAC_REF. Thus, the DC-AC power converter 100 can easily smoothly switch the step-up operation to the step-down operation or vice versa.

According to the first embodiment, as hereinabove described, the DC-AC power converter 100 is formed to selectively carry out the positive step-down mode, the positive step-up mode, the negative step-down mode and the negative step-up mode on the basis of the bidirectional switch control signals CUR, CUS, CVR, CVS, CWR and CWS for the bidirectional switches SUR, SUS, SVR, SVS, SWR and SWS output from the switch distribution means 16 correspondingly to the PWM signals 1 and 2 in DC-AC power conversion in one cycle of the output voltage command VAC_REF. Thus, both of the PWM signals 1 and 2 are distributed to the bidirectional switch control signals CUR, CUS, CVR, CVS, CWR and CWS with respect to the corresponding prescribed bidirectional switches SUR, SUS, SVR, SVS, SWR and SWS respectively, whereby the DC-AC power converter 100 can smoothly switch the positive step-down mode, the positive step-up mode, the negative step-down mode and the negative step-up mode.

According to the first embodiment, as hereinabove described, the DC-AC power converter 100 is formed to convert the PWM signal 1 to a high or low level and to keep the PWM signal 2 at a constant level in each step-down mode, and to convert the PWM signal 2 to a high- or low-level and to keep the PWM signal 1 at a constant level in each step-up mode. Thus, the DC-AC power converter 100 can perform the step-down operation by on-off controlling the bidirectional switches SVS and SWS (SVR and SWR) on the basis of the PWM signal 1 in each step-down mode. Further, the DC-AC power converter 100 can perform the step-up operation by on-off controlling the bidirectional switches SUR and SUS on the basis of the PWM signal 2 in each step-up mode.

According to the first embodiment, as hereinabove described, the DC-AC power converter 100 is provided with the first voltage command generation means 12 calculating the transformation ratio MI1 expressing the ratio of the command value of the output voltage command VAC_REF with respect to the direct voltage of the DC power supply 1 and generating the polarity determination signal SIGN for the output voltage command VAC_REF, the first PWM command generation means 14 generating the PWM signal 1 from the transformation ratio MI1, the second voltage command generation means 13 calculating the step-up switching ratio MI2 on the basis of the transformation ratio MI1 and the second PWM command generation means 15 generating the PWM signal 2 from the step-up switching ratio MI2. Thus, the DC-AC power converter 100 can easily step down the direct voltage of the DC power supply 1 with the first PWM command generation means 14 on the basis of PWM control from the transformation ratio MI1. Further, the DC-AC power converter 100 can easily step up the direct voltage of the DC power supply 1 with the second voltage command generation means 13 calculating the step-up switching ratio MI2 on the basis of the transformation ratio MI1 and the second PWM command generation means 15 generating the PWM signal 2 from the step-up switching ratio MI2 on the basis of PWM control from the step-up switching ratio MI2.

According to the first embodiment, as hereinabove described, the second voltage command generation means 13 is formed to set the step-up switching ratio MI2 to 0 when the transformation ratio MI1 is less than 1 and to calculate the step-up switching ratio MI2 according to 1 - 1/ (transformation ratio MI1) when the transformation ratio MI1 is at least 1. Thus, the second voltage command generation means 13 sets the step-up switching ratio MI2 to 0 in the step-down operation in which the transformation ratio MI1 is less than 1, so that the DC-AC power converter 100 does not step up the voltage VB. On the other hand, the solution of 1 - 1/ (transformation ratio MI1) is greater than 0 in the step-up operation in which the transformation ratio MI1 is at least 1, whereby the DC-AC power converter 100 can be controlled to step up the voltage VB.

According to the first embodiment, as hereinabove described, the switch distribution means 16 is formed to distribute and output the PWM signal 1 to the bidirectional switch control signals for the corresponding prescribed bidirectional switches on the basis of the polarity determination signal SIGN for the output voltage command VAC_REF and to distribute and output the PWM signal 2 to the bidirectional switch control signals for the corresponding prescribed bidirectional switches regardless of the polarity determination signal SIGN for the output voltage command VAC_REF in one cycle of the output voltage command VAC_REF. Thus, both of the PWM signals 1 and 2 can be easily regularly distributed to the bidirectional switch control signals for the corresponding prescribed bidirectional switches in one cycle of the output voltage command VAC_REF, whereby the DC-AC power converter 100 can smoothly switch the step-up operation to the step-down operation or vice versa.

According to the first embodiment, as hereinabove described, the DC-AC power converter 100 is formed to switch distribution of the PWM signal 1 to the bidirectional switches between the case where the polarity determination signal SIGN for the output voltage command VAC_REF is positive and the case where the same is negative. Thus, the DC-AC power converter 100 can easily smoothly switch the positive step-down mode (period A: see Fig. 9) to the negative step-down mode (period C: see Fig. 9) on the basis of the polarity determination signal SIGN.

(Second Embodiment)

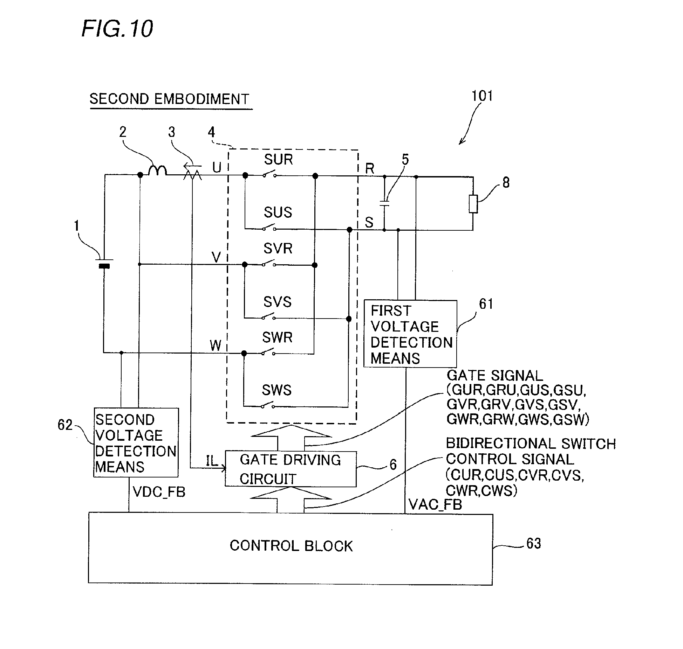

A DC-AC power converter 101 according to a second embodiment of the present invention is now described with reference to Figs. 10 to 12. The DC-AC power converter 101 according to the second embodiment performs output voltage feedback control, in order to improve output voltage accuracy.

As shown in Fig. 10, the DC-AC power converter 101 according to the second embodiment includes a first voltage detection means 61 connected between a load 8 and a filter capacitor 5 and a second voltage detection means 62 connected to positive and negative poles of a DC power supply 1 for detecting the voltage thereof. The first voltage detection means 61 is formed to output single-phase alternating voltage VAC_FB input in the load 8 to a control block 63. The second voltage detection means 62 is formed to output voltage VDC_FB proportionate to the DC power supply 1 to the control block 63.

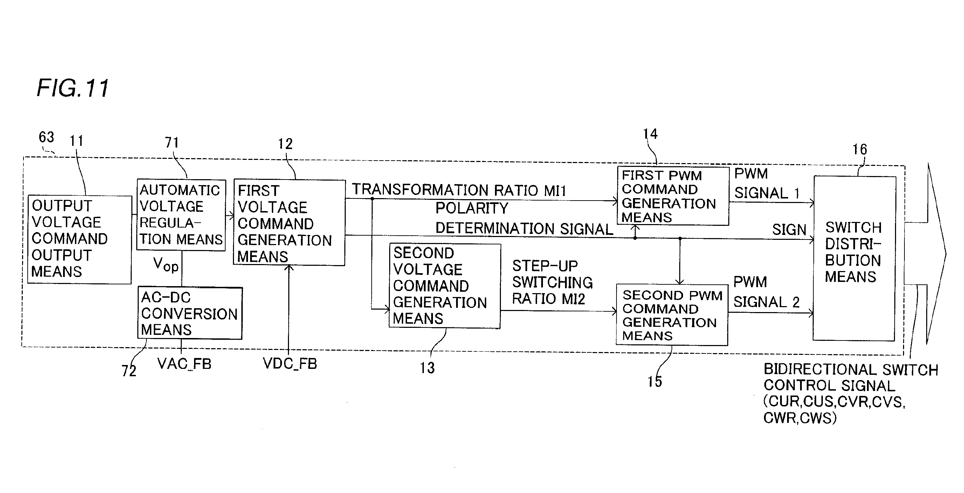

As shown in Fig. 11, the control block 63 of the DC-AC power converter 101 according to the second embodiment is formed by adding an automatic voltage regulation means (AVR) 71 and an AC-DC conversion means 72 to the control block 7 (see Fig. 3) of the DC-AC power converter 100 according to the aforementioned first embodiment, in order to perform the output voltage feedback control. The automatic voltage regulation means 71 is provided between an output voltage command output means 11 and a first voltage command generation means 12. The AC-DC conversion means 72 is connected to the automatic voltage regulation means 71. The output voltage command output means 11 is an example of the "output voltage command generation means" in the present invention. The automatic voltage regulation means 71 is an example of the "voltage regulation means" in the present invention. The remaining structure of the control block 63 is similar to that of the control block 7 of the DC-AC power converter 100 according to the aforementioned first embodiment.

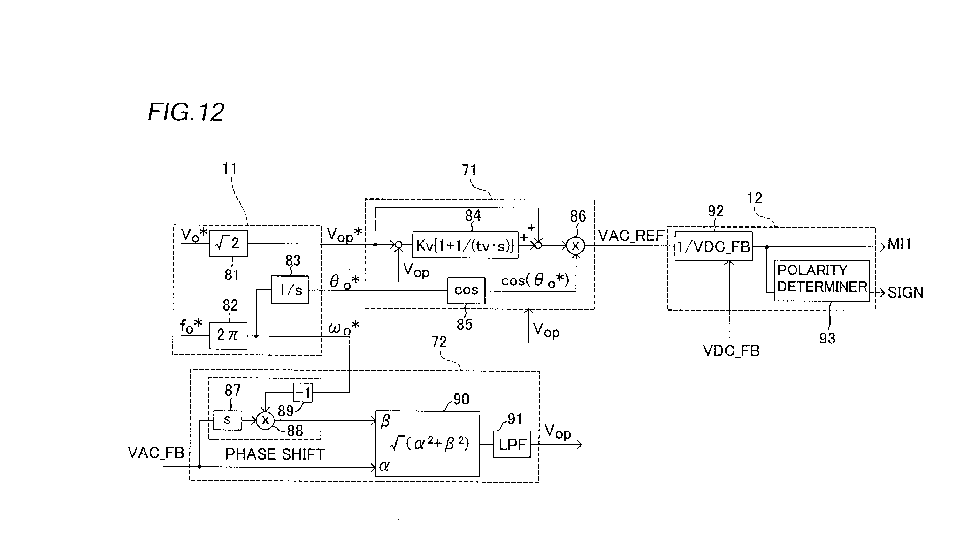

As shown in Fig. 12, the output voltage command output means 11 includes a coefficient multiplier 81 having a function of multiplying a value by $\sqrt{2}$, another coefficient multiplier 82 having a function of multiplying a value by $2\pi$ and an integrator 83 calculating a phase. The automatic voltage regulation means 71 includes a PI controller 84, a cosine calculator 85 calculating a cosine and a multiplier 86. The AC-DC conversion means 72 includes a differentiator 87, a multiplier 88, a coefficient multiplier 89 having a function of multiplying a value by -1, an operator 90 and a low-pass filter (LPF) 91. The first voltage command generation means 12 includes a divider 92 and a polarity determiner 93.

The output voltage feedback control of the DC-AC power converter 101 according to the second embodiment is now described with reference to Fig. 12. The DC-AC power converter 101 according to the second embodiment converts an AC power output which is an alternating quantity to a DC power output.

According to the second embodiment, the DC-AC power converter 101 sets the effective value $V_0^*$ of the AC output, the frequency $f_o^*$ of the AC output and the rated voltage of a storage battery with respect to the control block 63 with a setter (not shown), similarly to the first embodiment. In the output voltage command output means 11, the coefficient multiplier 81 multiplies the effective value $V_o^*$ of the AC output by $\sqrt{2}$ and calculates a peak command $V_{OP}^*$ of the AC output, as shown in Fig. 12. Further, the coefficient multiplier 82 multiplies the frequency $f_o^*$ of the AC output by $2\pi$, and calculates an AC angular frequency command $\omega_0^*$. In addition, the integrator 83 calculates an AC phase command $\theta_0^*$ from the AC angular frequency command $\omega_0^*$. Then, the output voltage command output means 11 outputs the peak command $V_{OP}^*$ of the AC output, the AC phase command $\theta_0^*$ and the AC angular frequency command $\omega_0^*$.

In the automatic voltage regulation means 71, the difference between the peak command $V_{OP}^*$ of the AC output and a peak value $V_{OP}$ of the AC output calculated by the AC-DC conversion means 72 is input in the PI controller 84 while a DC manipulated variable is output, and an AC manipulated variable is decided by multiplying the DC manipulated variable by the cosine ($\cos\theta_0^*$) of the AC phase command $\theta_0^*$. The PI controller 84 calculates the DC manipulated variable according to Kv{1 + 1/ (tv.s) }, where Kv represents a control proportional gain, and tv represents an integration time constant. The cosine calculator 85 calculates the cosine ($\cos\theta_0^*$) from the AC phase command $\theta_0^*$ while the multiplier 86 multiplies the cosine ($\cos\theta_0^*$) by the DC manipulated variable and calculates an output voltage command VAC_REF. The output voltage command VAC_REF is input in the first voltage command generation means 12. Thus, the DC-AC power converter 101 regulates the output voltage command VAC_REF which is an AC manipulated variable (performs the output voltage feedback control) on the basis of the difference between DC quantities, i.e., the peak command $V_{OP}^*$ of the AC output and the peak value $V_{OP}$ of the AC output calculated by the AC-DC conversion means 72.

The operation of the AC-DC conversion means 72 is now described. In general, three-phase alternating current to be transformed to direct current is first transformed into orthogonal two-phase alternating current ($\alpha$-$\beta$ transformation), and thereafter transformed into two-phase direct current (d-q transformation). This is because the direction of phase rotation cannot be defined unless there is at least two-phase alternating current. In a case of single-phase alternating current, on the other hand, the direction of phase rotation cannot be detected, and hence a method (affine $\alpha$-$\beta$ transformation) of generating voltage leadingly or laggingly orthogonal to detected voltage is generally carried out on the assumption that the phase rotates in one direction. While Hilbert transformation employing an FIR (finite impulse response) filter may be carried out as a method of advancing (delaying) only the phase by 90° at the same amplitude, the sampling period must be speeded up in this case. According to the second embodiment, therefore, the DC-AC power converter 101 is formed to advance (delay) the phase by 90° by differentiating the single-phase alternating voltage VAC_FB. The DC-AC power converter 101 can also advance (delay) the phase by 90° by integrating the single-phase alternating voltage VAC_FB.

A method of advancing (delaying) only the phase of the single-phase alternating current by 90° at the same amplitude is now described with reference to numerical formulas. Assuming that two-phase alternating current has a peak value $V_{OP}$ at a time t = 0, a projection $V_\alpha$ of the two-phase alternating current on an $\alpha$-axis is calculated as follows:

$$V_\alpha = V_{OP}\cos\theta_0 = V_{OP}\cos\omega_0 t = VAC\_FB \quad \dots \quad (6)$$

Thus, the projection $V_\alpha$ of the two-phase alternating current on the $\alpha$-axis is equal to the detected single-phase alternating voltage VAC_FB. Similarly, a projection $V_\beta$ on a $\beta$-axis is calculated as follows:

$$V_\beta = V_{OP}\sin\theta_0 = V_{OP}\sin\omega_0 t \quad \dots \quad (7)$$

The projection $V_\beta$ on the $\beta$-axis is undetectable, dissimilarly to the aforementioned projection $V_\alpha$ of the two-phase alternating current on the $\alpha$-axis. Therefore, the projection $V_\beta$ is obtained by time-differentiating the projection $V_\alpha$

on the a-axis as follows:

$$dV_\alpha/dt = -(1/\omega_0)V_{OP}\sin\omega_0 t \ \dots \ (8)$$

Thus, the projection $V_\beta$ is obtained as follows:

$$V_\beta = -(1/\omega_0)dV_\alpha/dt \ \dots \ (9)$$

Then, the peak value $V_{OP}$, which is a direct quantity, of the AC output is obtained as follows:

$$V_{OP} = (V_\alpha^2 + V_\beta^2)^{1/2} \ \dots \ (10)$$

The method of advancing (delaying) only the phase of the single-phase alternating current by 90° at the same amplitude is more specifically described with reference to Fig. 12.

As shown in Fig. 12, the single-phase alternating voltage VAC_FB is input in the AC-DC conversion means 72, and directly input in the operator 90 as $V_\alpha$ (refer to the above equation (6)). Further, the single-phase alternating voltage VAC_FB is input in the differentiator 86 and differentiated (refer to the above equation (8)). The multiplier 88 multiplies the differential value of the single-phase alternating voltage VAC_FB by a value obtained by the coefficient multiplier 89 by multiplying the AC angular frequency command $\omega_0^*$ by -1, and inputs the obtained value in the operator 90 as $V_\beta$ (refer to the above equation (9)). The operator 90 extracts the square root of a value obtained by squaring $V_\alpha$ and $V_\beta$ respectively and adding the squares to each other. Thus, the peak value $V_{OP}$ of the AC output is calculated.

Thereafter the AC-DC conversion means 72 outputs the peak value $V_{OP}$ of the AC output through the low-pass filter (LPF) 91. The peak value $V_{OP}$ of the AC output is input in the aforementioned automatic voltage regulation means 71, and employed for regulating the output voltage command VAC_REF (output voltage feedback control).

The output voltage command VAC_REF output from the automatic voltage regulation means 71 is input in the first voltage command generation means 12, so that the divider 92 divides the same by the voltage VDC_FB proportionate to the DC power supply 1 and outputs the result as a transformation ratio MI1. Further, the polarity determiner 93 outputs a polarity determination signal SIGN, which is a logical symbol expressing the polarity (positive or negative) of the output voltage command VAC_REF. Subsequent operations are similar to those of the control block 7 of the DC-AC power converter 100 according to the aforementioned first embodiment.

According to the second embodiment, as hereinabove described, the AC-DC power converter 101 is provided with the output voltage command output means 11 generating the output voltage command VAC_REF and the automatic voltage regulation means 71 calculating the output voltage command VAC_REF on the basis of the peak command $V_{OP}^*$ of the AC output and the single-phase alternating voltage VAC_FB. Thus, the AC-DC power converter 101 can perform the output voltage feedback control of the output voltage command VAC_REF on the basis of the peak command $V_{OP}^*$ of the AC output and the single-phase alternating voltage VAC_FB, whereby the output voltage accuracy can be improved.

(Third Embodiment)

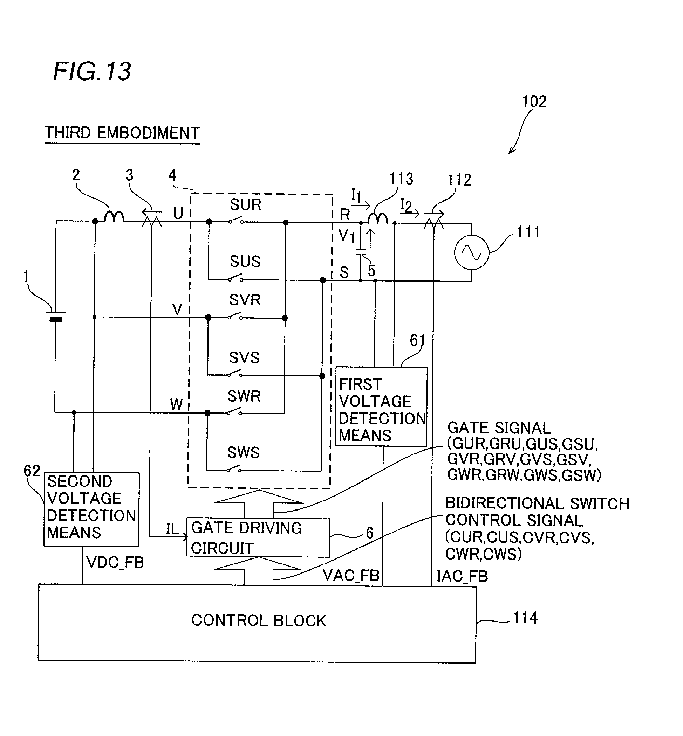

A DC-AC power converter 102 according to a third embodiment of the present invention is now described with reference to Figs. 13 to 15. The DC-AC power converter 102 according to the third embodiment performs current feedback control, in order to improve output current accuracy. In a case of charging a DC power supply 1, the DC-AC power converter 102 generally performs constant current control. In the case of performing constant current control, the DC-AC power converter 102 keeps current at a constant level by performing the current feedback control.

The DC-AC power converter 102 according to the third embodiment is provided with an AC power supply 111 in place of the load 8 as shown in Fig. 13, dissimilarly to the aforementioned first and second embodiments. A current detection means 112 and an AC reactor 113 are provided between the AC power supply 111 and a filter capacitor 5. The AC reactor 113, employed for stabilizing current control when the impedance of the AC power supply 111 is small, may not be provided if the impedance of the AC power supply 111 is large.

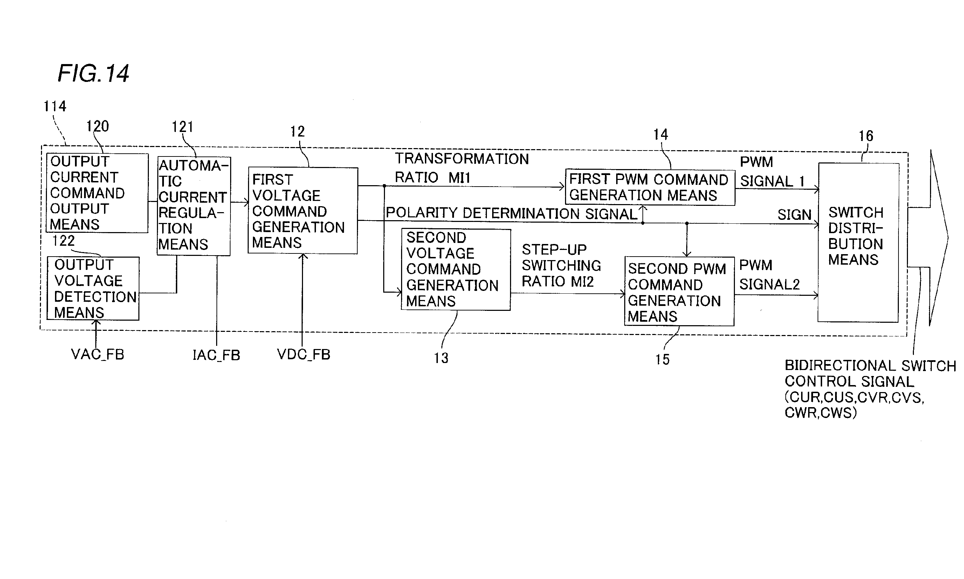

As shown in Fig. 14, a control block 114 is provided with an output current command output means 120 and an automatic current regulation means 121, while an output voltage detection means 122 is connected to the automatic current regulation means 121. The output current command output means 120 is an example of the "output current command generation means" in the present invention. The automatic current regulation means 121 is an example of the "current regulation means" in the present invention. The remaining structure of the control block 114 is similar to that of the control block 7 of the DC-AC power converter 100 according to the aforementioned first embodiment.

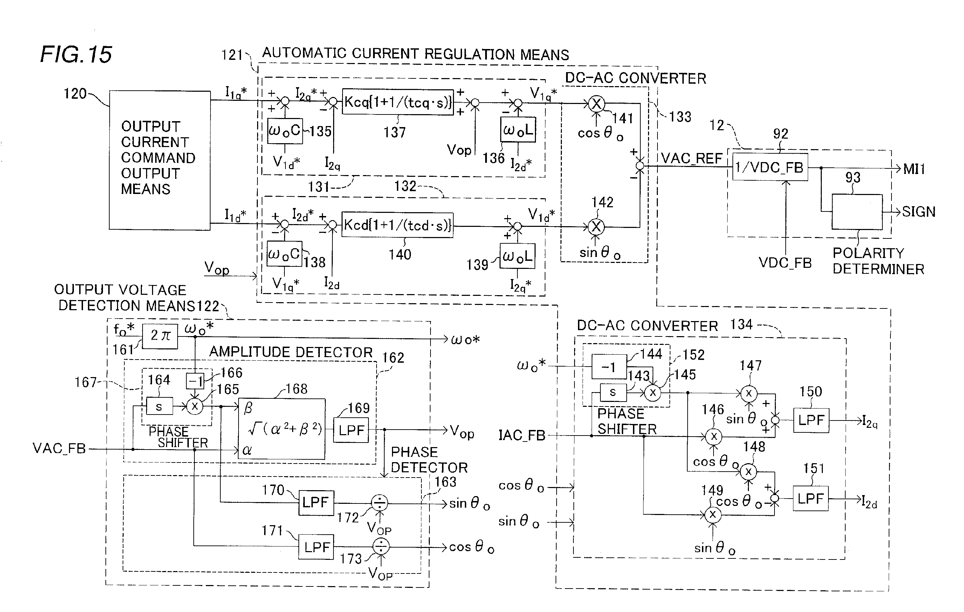

As shown in Fig. 15, the automatic current regulation means 121 includes a q-axis feedback control portion 131, a d-axis feedback control portion 132, a DC-AC converter 133 and an AC-DC converter 134.

The q-axis feedback control portion 131 includes a coefficient multiplier 135 multiplying a value by the product of an angular frequency $\omega_0^*$ and the capacitance of the filter capacitor 5 as a coefficient, another coefficient multiplier 136 multiplying a value by the product of the angular frequency $\omega_0^*$ and the inductance of the AC reactor 113 as a coefficient and a PI controller 137. The d-axis feedback control portion 132 includes a coefficient multiplier 138 multiplying a value by the product of the angular frequency $\omega_0^*$ and the capacitance of the filter capacitor 5 as a coefficient, another coefficient multiplier 139 multiplying a value by the product of the angular frequency $\omega_0^*$ and the inductance of the AC reactor 113 as a coefficient and a PI controller 140.

The DC-AC converter 133 includes two multipliers 141 and 142. The AC-DC converter 134 includes a differentiator 143, a coefficient multiplier 144 having a function of multiplying a value by -1, five multipliers 145, 146, 147, 148 and 149 and two LPFs 150 and 151. The differentiator 143, the coefficient multiplier 144 and the multiplier 145 constitute a phase shifter 152.

The output voltage detection means 122 includes a coefficient multiplier 161 having a function of multiplying a value by $2\pi$, an amplitude detector 162 and a phase detector 163.

The amplitude detector 162 includes a differentiator 164, a multiplier 166, a coefficient multiplier 166 having a function of multiplying a value by -1, an operator 168 and a low-pass filter (LPF) 169. The differentiator 164, the multiplier 165 and the coefficient multiplier 166 constitute a phase shifter 167. The phase detector 163 includes two LPFs 170 and 171 and two dividers 172 and 173.

Voltage-current equations for the current feedback control are now described with reference to numerical formulas.

While current $I_1$ input in the AC reactor 113 is regarded as the object of the current feedback control as shown in Fig. 13 when the DC power supply 1 is charged, the current $I_1$ has a pulse shape and is hard to detect in a step-up mode in the charging. Therefore, it is assumed that the object of the current feedback control is current $I_2$, output from the AC reactor 113, whose waveform continuously changes. It is also assumed that a manipulated variable in the current feedback control is voltage $V_1$ output from the filter capacitor 5. Further, it is difficult to directly control an alternating quantity in view of control responsibility and stability, and hence the DC-AC power converter 102 performs the current feedback control by transforming the alternating quantity into a direct quantity. More specifically, the DC-AC power converter 102 introduces a d-q coordinate axis rotating in synchronization with the frequency of the AC power supply 111, and performs d-q transformation for transforming the alternating quantity into a direct quantity on the d-q coordinate axis. The DC-AC power converter 102 obtains d-axis components and q-axis components corresponding to projections of the current $I_2$ and the voltage $V_1$ on the d-axis and the q-axis respectively, so that the following current-voltage equations (11) to (14) hold for the d-axis components and the q-axis components. The d-q coordinate axis is decided on the assumption that the d-axis component of the alternating voltage of the AC power supply 111 is regularly 0 and the q-axis component represents a peak value $V_{OP}^*$ of the alternating voltage described later.

$$I_{2q} = I_{1q} + \omega_0 C V_{1d} \quad ... \quad (11)$$

$$I_{2d} = I_{1d} - \omega_0 C V_{1q} \quad ... \quad (12)$$

$$V_{1q} = -\omega_0 L I_{2d} + V_{OP} \quad ... \quad (13)$$

$$V_{1d} = \omega_0 L I_{2q} \quad ... \quad (14)$$

In the above equations, $I_{2q}$ and $I_{2d}$ represent the q-axis component and the d-axis component of the current

$I_2$ respectively. $I_{1q}$ and $I_{1d}$ represent the q-axis component and the d-axis component of the current $I_1$ respectively. $V_{1q}$ and $V_{1d}$ represent the q-axis component and the d-axis component of the voltage $V_1$ respectively. $V_{OP}$ represents the peak value of the alternating voltage of the AC power supply 111, as described above. C represents the capacitance of the filter capacitor 5, and L represents the inductance of the AC reactor 113.

The current feedback control operation is now specifically described with reference to Fig. 15.

According to the third embodiment, the DC-AC power converter 102 sets the effective value $V_0^*$ of the alternating voltage of the AC power supply 111, the frequency $f_0^*$ of the alternating voltage and charging current for the DC power supply 1 with respect to the control block 114 with a setter (not shown). In the output voltage detection means 122, the coefficient multiplier 161 multiplies the frequency $f_0^*$ of an AC output by $2\pi$, calculates an AC angular frequency command $\omega_0^*$, and outputs the same to the automatic current regulation means 121, as shown in Fig. 15. An unshown coefficient multiplier multiplies an amplitude $V_0^*$ of the alternating voltage by $\sqrt{2}$, and calculates a peak value $V_{OP}^*$ of the alternating voltage. The amplitude detector 162 transforms single-phase alternating voltage VAC_FB into two-phase alternating voltage (affine $\alpha$-$\beta$ transformation) and thereafter transforms the same into two-phase direct voltage (d-q transformation), similarly to the AC-DC conversion means 72 of the DC-AC power converter 101 according to the aforementioned second embodiment. Thus, the q-axis component $V_{OP}$ of the voltage of the AC power supply 111 is calculated and input in the automatic current regulation means 121.

Further, the amplitude detector 162 inputs projections $V_\alpha$ and $V_\beta$ of the two-phase alternating voltage on an $\alpha$-axis and a $\beta$-axis in the LPFs 171 and 170 of the phase detector 163 respectively. The dividers 173 and 172 divide the projections $V_\alpha$ and $V_\beta$ input in the LPFs 171 and 170 by $V_{OP}$ respectively. Consequently, the dividers 173 and 172 output phases $\sin\theta_o$ and $\cos\theta_o$ to the automatic current regulation means 121 respectively. Thus, the output voltage detection means 122 calculates the AC angular frequency command $\omega_0^*$, the q-axis component $V_{OP}$ of the voltage of the AC power supply 111 and the phases $\sin\theta_o$ and $\cos\theta_o$.

The AC-DC converter 134 of the automatic current regulation means 121 receives current IAC_FB output from the AC reactor 113 and detected by the current detection means 122, and the multiplier 146 multiplies the same by the phase $\cos\theta_o$. The phase shifter 152 shifts the phase of the current IAC_FB, and the multiplier 147 thereafter multiplies the same by the phase $\sin\theta_o$. Outputs of the multipliers 146 and 147 are added up, and the result is input in the LPF 150, which in turn outputs the same as the q-axis component $I_{2q}$ of the current $I_2$.

Further, the multiplier 149 multiplies the current IAC_FB by the phase $\sin\theta_o$. The phase shifter 152 shifts the phase of the current IAC_FB, and the multiplier 148 thereafter multiplies the same by the phase $\cos\theta_o$. An output of the multiplier 149 is subtracted from that of the multiplier 148, and the result is input in the LPF 151, which in turn outputs the d-axis component $I_{2d}$ of the current $I_2$. This transformation is a rotational transformation, and the current IAC_FB is transformed into a quantity on the d-q axis, which is a rotating coordinate. Thus, the AC-DC converter 134 calculates the q-axis component $I_{2q}$ and the d-axis component $I_{2d}$ of the current $I_2$.

In the automatic current regulation means 121, the output current command output means 120 inputs current commands $I_{1q}^*$ and $I_{1d}^*$ in the q- and d-axis feedback control portions 131 and 132 respectively. In the case of charging the DC power supply 1, the current command $I_{1d}^*$ may be set to 0, and the current command $I_{1q}^*$ may be set to a value proportionate to the charging current for the DC power supply 1 set with the aforementioned setter (not shown). A constant of proportionality deciding the proportionality is equal to the ratio between the effective value of the alternating voltage and the direct voltage. In other words, the current command $I_{1q}^*$ may be obtained by dividing the direct voltage VDC_FB by the effective value $V_0^*$ of the alternating voltage and multiplying the result by the charging current. When $I_{1q}^*$ and $I_{1d}^*$ are commanded in this manner, alternating current set by these current commands $I_{1q}^*$ and $I_{1d}^*$ flows into a bidirectional switch group 4, which in turn transforms the current into direct current equal to the charging current for the DC power supply 1.

The q-axis feedback control portion 131 adds a value obtained by the coefficient multiplier 135 by multiplying a d-axis component $V_{1d}^*$ of a manipulated variable $V_1$ by $\omega_o C$ to the current command $I_{1q}^*$, to obtain a current command $I_{2q}^*$ (refer to the above equation (11)). The d-axis component $V_{1d}^*$ used in this calculation is the output of the d-axis feedback portion 132, and the current command $I_{2q}^*$ cannot be calculated unless an initial value at the starting point of the calculation is decided. The current command $I_{2q}^*$ can be calculated by assuming that the manipulated variable $V_1$ is equal to the voltage of the DC power supply 111 in an initial state while assuming that $V_{1d} = 0$. Then, the difference between the current command $I_{2q}^*$ and current $I_{2q}$ is input in the PI controller 137. A voltage manipulated variable is calculated according to $Kcq\{1 + 1/(tcq.s)\}$, where Kcq represents a control proportional gain, and tcq represents an integration time constant. Thereafter the peak value $V_{OP}$ of the AC output is added to the output of the PI controller 137, and a value obtained by multiplying the current command $I_{2d}^*$ by $\omega_o L$ is subtracted (refer to the above equation (13)). Thereafter the multiplier 141 of the DC-AC converter 133 multiplies the result by the phase $\cos\theta_o$.

The d-axis feedback control portion 132 subtracts a value obtained by the coefficient multiplier 138 by multiplying the q-axis component $V_{1q}^*$ of the manipulated variable $V_1$ by $\omega_o C$ from the current command $I_{1d}^*$, to obtain a current command $I_{2d}^*$ (refer to the above equation (13)). Similarly to the case of the q-axis feedback control portion 131, the current command $I_{2d}^*$ can be calculated by assuming that the manipulated variable $V_1$ is equal to the voltage of the DC power supply 111 in the initial state while assuming that $V_{1q}{}^* = V_{oq}{}^*$. Then, the difference between the current command $I_{2d}{}^*$ and current $I_{2d}$ is input in the PI controller 140. Thereafter a value obtained by multiplying the current command $I_{2d}{}^*$ by $\omega_o L$ is added to the output of the PI controller 140 (refer to the above equation (14)), to obtain a d-axis component $V_{1d}{}^*$ of the manipulated variable $V_1$. Thereafter the multiplier 142 of the DC-AC converter 133 multiplies the same by the phase $\sin\theta_o$.

Then, an output voltage command VAC_REF is calculated by subtracting the output of the multiplier 142 from that of the multiplier 141 of the DC-AC converter 133, and input in the first voltage command generation means 12. Thus, the automatic current regulation means 121 employs the current IAC_FB ($I_{2q}$, $I_{2d}$) detected by the current detection means 112 for feedback control of the output voltage command VAC_REF. The remaining operation of the third embodiment is similar to that of the aforementioned first embodiment.

According to the third embodiment, as hereinabove described, the DC-AC power converter 102 is provided with the output current command output means 120 obtaining the output voltage command VAC_REF from the direct voltage and the automatic current regulation mean 121 calculating the output voltage command VAC_REF on the basis of the current commands $I_{1q}{}^*$ and $I_{1d}{}^*$, the current IAC_FB and the single-phase alternating voltage VAC_FB. Thus, the DC-AC power converter 102 can perform the current feedback control on the output voltage command VAC_REF on the basis of the current commands $I_{1q}{}^*$ and $I_{1d}{}^*$, the current IAC_FB and the single-phase alternating voltage VAC_FB, whereby the output current accuracy can be improved.

(Fourth Embodiment)

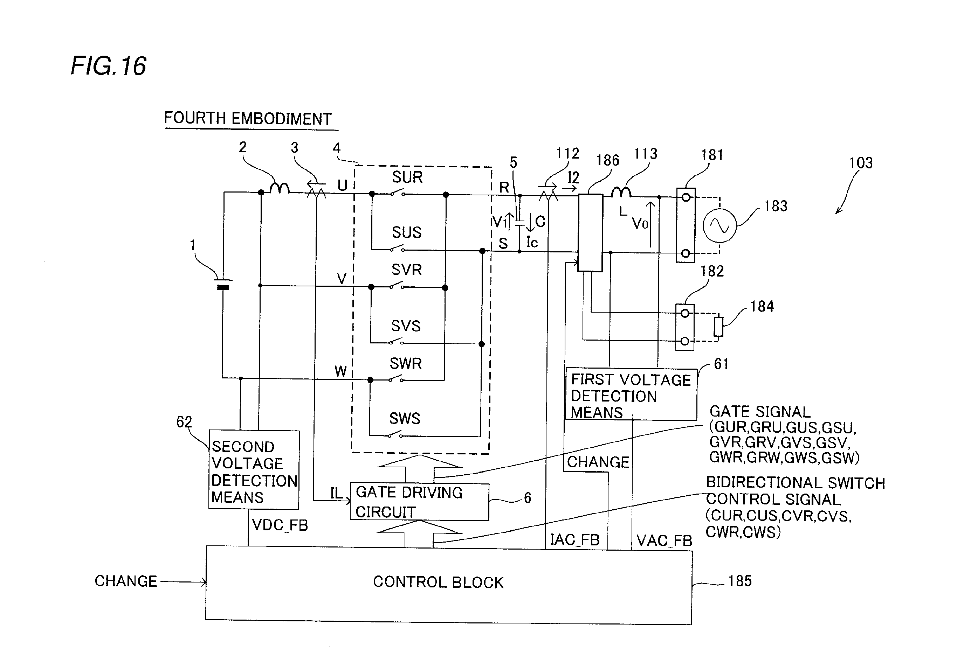

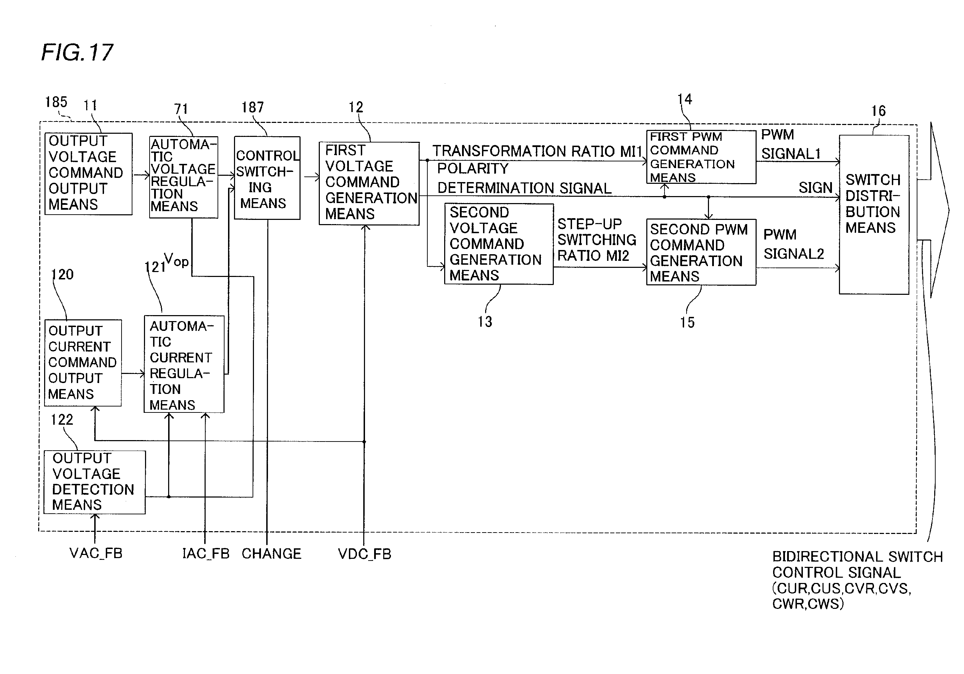

A DC-AC power converter 103 according to a fourth embodiment of the present invention is now described with reference to Figs. 16 and 17. According to the fourth embodiment, the DC-AC power converter 103 is formed to be capable of switching discharging and charging.

The DC-AC power converter 103 according to the fourth embodiment is provided with a charging terminal 181 and a discharging terminal 182, as shown in Fig. 16. The DC-AC power converter 103 is so formed that an AC power supply 183 is connected to the charging terminal 181 and an AC load 184 is connected to the discharging terminal 182. An end of an AC reactor 113 is connected to a first end of the charging terminal 181. The DC-AC power converter 103 is further provided with a main circuit selector 186, to which another end of the AC reactor 113, a second end of the charging terminal 181, the discharging terminal 182 and R and S terminals corresponding to outputs of a bidirectional switch group 4 are connected. A control block 185 outputs a charging/discharging switching signal CHANGE, which in turn is input in the main circuit selector 186. The main circuit selector 186 is constituted of two switches such as electromagnetic contactors switched by an external electric signal, each having at least two main contacts, for example. First and second ends of the first main contact of the first electromagnetic contactor are connected to the R terminal and the first end of the charging terminal 181 respectively, while first and second ends of the second main contact thereof are connected to the S terminal and the second end of the charging terminal 181 respectively. First and second ends of the first main contact of the second electromagnetic contactor are connected to the R terminal and a first end of the discharging terminal 182 respectively, while first and second ends of the second main contact thereof are connected to the S terminal and a second end of the discharging terminal 182 respectively. The main circuit selector 186 may be constituted in the aforementioned manner. Similarly to the case of the third embodiment, the AC reactor 113, employed for stabilizing current control when the impedance of an AC power supply 111 is small, may not be provided if the impedance of the AC power supply 111 is large.

As shown in Fig. 17, the control block 185 is provided with a control switching means 187, to be connected to a first voltage command generation means 12. An output voltage command output means 11 and an automatic voltage regulation means 71 identical to those in the aforementioned second embodiment are connected to the control switching means 187. Further, an output current command output means 120, an automatic current regulation means 121 and an output voltage detection means 122 identical to those in the aforementioned third embodiment are connected to the control switching means 187. In addition, the control switching means 187 is so formed that the charging/discharging switching signal CHANGE is input therein. The term "charging" denotes that from the AC power supply 183 to the DC power supply 1, and the term "discharging" denotes that from the DC power supply 1 to the AC load 184. Charging and discharging are not performed at the same time, but only either one is carried out. The control switching means 187 is an example of the "command switching means" in the present invention.

The operation of switching charging and discharging is now described with reference to Fig. 17.

The user selects whether to perform the discharging or to perform the charging with an operating instrument (not shown) such as a selector switch. This operating instrument is connected to an input circuit (not shown) such as a DI circuit, and an operating signal is input in the control block 185, which in turn generates the charging/discharging switching signal CHANGE with the operating signal. The charging/discharging switching signal CHANGE is an on/off signal instructing charging in an OFF-state and instructing discharging in an ON-state, for example. When the charging/discharging switching signal CHANGE instructs discharging, the main circuit selector 186 selects the discharging terminal 182 by turning on/off the two switches thereof, and the control switching means 187 selects the automatic voltage regulation means 71, so that the output of the automatic voltage regulation means 71 is input in the first voltage command generation means 12. Thus, the DC-AC power converter 103 performs discharging on the basis of the output voltage feedback control according to the aforementioned second embodiment. When the charging/discharging switching signal CHANGE instructs charging, on the other hand, the main circuit selector 186 selects the charging terminal 181 by turning on/off the two switches thereof, and the control switching means 187 selects the automatic current regulation means 121, so that the output of the automatic current regulation means 121 is input in the first voltage command generation means 12. Thus, the DC-AC power converter 103 performs charging according to charging current on the basis of the current feedback control according to the aforementioned third embodiment.

According to the fourth embodiment, as hereinabove described, the DC-AC power converter 103 is provided with the main circuit selector 186 selecting either the AC load 184 connected to the discharging terminal 182 or the AC power supply 183 connected to the charging terminal 181 on the basis of the charging/discharging switching signal CHANGE and the control switching means 187 obtaining the voltage command by switching those output from the automatic voltage regulation means 71 and the automatic current regulation means 12 respectively. Thus, in a case of performing discharging by stepping down or stepping up the direct voltage of the DC power supply 1 to a prescribed level and driving the AC load 184, the DC-AC power converter 103 can improve output voltage accuracy by obtaining the voltage command by switching the same to that output from the automatic voltage regulation means 71 with the control switching means 187. In the charging operation preferably charging the DC power supply 1 with constant current, on the other hand, the DC-AC power converter 103 can easily charge the DC power supply 1 from the AC power supply 183 with the constant current by obtaining the voltage command by switching the same to that output from the automatic current regulation means 121 with the control switching means 187. Thus, the DC-AC power converter 103 can easily switch discharging and charging of the DC power supply 1 with the main circuit selector 186 and the control switching means 187.

Although the present invention has been described and illustrated in detail, it is clearly understood that the same is by way of illustration and example only and is not to be taken by way of limitation, the spirit and scope of the present invention being limited only by the terms of the appended claims.

For example, while the step-down and step-up control signals according to the present invention consist of the PWM signals in each of the aforementioned first to fourth embodiments, the present invention is not restricted to this. The step-down and step-up control signals according to the present invention may alternatively consist of signals other than the PWM signals.

While six bidirectional switches are provided in each of the aforementioned first to fourth embodiments, the present invention is not restricted to this. According to the present invention, not more than five or at least seven bidirectional switches may alternatively be provided.

While the bidirectional switches have the reverse-blocking IGBTs in each of the aforementioned first to fourth embodiments, the present invention is not restricted to this. According to the present invention, the bidirectional switches may alternatively have elements obtained by serially connecting IGBTs and diodes with each other.

While the PWM signals for controlling the step-down operation and the step-up operation are generated by triangular wave comparison in each of the aforementioned first to fourth embodiments, the present invention is not restricted to this. According to the present invention, the PWM signals for controlling the step-down operation and the step-up operation may alternatively be generated with a timer counter, for example.

While the DC-AC power converter 100 detects no voltage at all in the aforementioned first embodiment, the present invention is not restricted to this. The DC-AC power converter 100 may alternatively be provided with the second voltage detection means 62 shown in the second embodiment, for detecting the voltage of the DC power supply 1 and employing the detected direct voltage VDC_FB in place of the rated voltage of the storage battery set by the setter.

While the case of selecting voltage control is regarded as discharging and the case of selecting current control is regarded as charging in each of the aforementioned third and fourth embodiments, the present invention is not restricted to this. The AC load 111 itself includes that which may simply be supplied with general constant voltage and that requiring current control as in a case of performing torque control of an electric motor. The charging terminal and the main circuit selector may be omitted as an apparatus capable of supplying power to both of these, for example.

## Claims

1. A DC-AC power converter comprising:

   a power conversion portion (2, 4), including a DC power supply (1), a plurality of bidirectional switches (4) and a DC reactor (2) arranged between said DC power supply and said bidirectional switches, for performing DC-AC power conversion;

an alternating voltage command output means (11) outputting an alternating voltage command;

a step-down control signal generation means (12, 14) generating a step-down control signal on the basis of said alternating voltage command and direct voltage of said DC power supply;

a step-up control signal generation means (13, 15) generating a step-up control signal on the basis of said alternating voltage command and said direct voltage of said DC power supply; and

a switch distribution means (16) distributing and outputting said step-down control signal and said step-up control signal as switch control signals for corresponding prescribed said bidirectional switches respectively on the basis of a polarity determination signal for said alternating voltage command in one cycle of said alternating voltage command.

2. The DC-AC power converter according to claim 1,
wherein
said step-down control signal and said step-up control signal are regularly generated and output in one cycle of said alternating voltage command.

3. The DC-AC power converter according to claim 1 or 2, formed to selectively carry out a positive step-down mode, a positive step-up mode, a negative step-down mode and a negative step-up mode on the basis of said switch control signals for said bidirectional switches output from said switch distribution means correspondingly to said step-down control signal and said step-up control signal in DC-AC power conversion in one cycle of said alternating voltage command.

4. The DC-AC power converter according to claim 3, formed to convert said step-down control signal to a high level or a low level and to set said step-up control signal to a constant level in each said step-down mode, and
to convert said step-up control signal to a high level or a low level and to set said step-down control signal to a constant level in each said step-up mode.

5. The DC-AC power converter according to any one of claims 1 to 4, wherein
said step-down control signal generation means and said step-up control signal generation means include a common first voltage command generation means (12) calculating a transformation ratio which is the ratio of the value of said alternating voltage command to said direct voltage of said DC power supply and generating said polarity determination signal for said alternating voltage command,
said step-down control signal generation means includes a step-down PWM control signal generation means (14) generating a step-down PWM control signal from said transformation ratio,
said step-up control signal generation means includes:

a second voltage command generation means (13) calculating a step-up switching ratio on the basis of said transformation ratio, and
a step-up PWM control signal generation means (15) generating a step-up PWM control signal from said step-up switching ratio, and
said switch distribution means is formed to distribute and output said step-down PWM control signal and said step-up PWM control signal as said switch control signals for said corresponding prescribed bidirectional switches respectively on the basis of said polarity determination signal for said alternating voltage command in one cycle of said alternating voltage command.

6. The AC-DC power converter according to claim 5,
wherein
said second voltage command generation means is formed to set said step-up switching ratio to 0 if said transformation ratio is less than 1 and to calculate said step-up switching ratio according to 1 - 1/(transformation ratio) if said transformation ratio is at least 1.

7. The AC-DC power converter according to claim 5 or 6, wherein
said switch distribution means is formed to distribute and output said step-down PWM control signal as said switch control signals for said corresponding prescribed bidirectional switches on the basis of said polarity determination signal for said alternating voltage command and to distribute and output said step-up PWM control signal as said switch control signals for said corresponding prescribed bidirectional switches regardless of said polarity determination signal for said alternating voltage command in one cycle of said alternating voltage.

8. The DC-AC power converter according to claim 7,

wherein
said switch distribution means is formed to switch distribution of said step-down PWM control signal to said bidirectional switches in cases where said polarity determination signal for said alternating voltage command is positive and negative respectively.

**9.** The DC-AC power converter according to any one of claims 5 to 8, wherein
said step-down PWM control signal generation means is formed to generate said step-down PWM control signal by comparing said transformation ratio with a first triangular wave.

**10.** The DC-AC power converter according to claim 9, so formed that the maximum of the absolute value of said first triangular wave is less than the maximum of the absolute value of said transformation ratio.

**11.** The DC-AC power converter according to any one of claims 5 to 10, wherein
said step-up PWM control signal generation means is formed to generate said step-up PWM control signal by comparing said step-up switching ratio with a second triangular wave.

**12.** The DC-AC power converter according to any one of claims 1 to 11, wherein
said plurality of bidirectional switches include a bidirectional switch connected to said DC reactor, a bidirectional switch connected to the positive pole of said DC power supply and a bidirectional switch connected to the negative pole of said DC power supply, and
said switch distribution means is formed to distribute and output said step-up control signal as a switch control signal for said bidirectional switch connected to said DC reactor and to distribute and output said step-down control signal as switch control signals for said bidirectional switches connected to the positive pole and the negative pole of said DC power supply respectively on the basis of said polarity determination signal for said alternating voltage command in one cycle of said alternating voltage command.

**13.** The DC-AC power converter according to any one of claims 1 to 12, wherein
said alternating voltage command output means includes:

an output voltage command generation means (11) generating an output voltage command, and
a voltage regulation means (71) calculating said alternating voltage command on the basis of said voltage command and a detected value of output voltage.

**14.** The DC-AC power converter according to any one of claims 1 to 12, wherein
said alternating voltage command generation means includes:

an output current command generation means (120) generating an output current command, and
a current regulation means (121) calculating said alternating voltage command on the basis of said output current command, a detected value of output current and a detected value of output voltage.

**15.** The DC-AC power converter according to any one of claims 1 to 12, wherein
said alternating voltage command output means includes:

an output voltage command generation means (11) generating an output voltage command,
a voltage regulation means (71) calculating a first alternating voltage command on the basis of said voltage command and a detected value of output voltage,
an output current command generation means (120) generating an output current command,
a current regulation means (121) calculating a second alternating voltage command on the basis of said output current command, a detected value of output current and a detected value of output voltage, and
a command switching means (187) obtaining said alternating voltage command by switching said first alternating voltage command and said second alternating voltage command on the basis of a switching signal.

## FIG.1

FIRST EMBODIMENT

100

GATE SIGNAL
(GUR,GRU,GUS,GSU,GVR,GRV,
GVS,GSV,GWR,GRW,GWS,GSW)

BIDIRECTIONAL
SWITCH CONTROL SIGNAL
(CUR,CUS,CVR,CVS,CWR,CWS)

## FIG.2

FIG.3

# FIG.4

## FIG.5

POSITIVE STEP-DOWN MODE
(VAC_REF > 0, SIGN=1)

①CWS←PWM SIGNAL 1
②CVS←/PWM SIGNAL 1

## FIG.6

POSITIVE STEP-UP MODE
(VAC_REF > 0, SIGN=1)

①CUS←PWM SIGNAL 2
②CUR←/PWM SIGNAL 2

## FIG.7

NEGATIVE STEP-DOWN MODE
(VAC_REF < 0, SIGN=0)

①CWR←PWM SIGNAL 1
②CVR←/PWM SIGNAL 1

## FIG.8

NEGATIVE STEP-UP MODE
(VAC_REF < 0, SIGN=0)

①CUR←PWM SIGNAL
②CUS←/PWM SIGNAL

## FIG.9

*FIG.10*

SECOND EMBODIMENT

101

2  3  4

SUR  R  5

U

SUS  S  8

1

SVR  V

SVS  FIRST
VOLTAGE
DETECTION
MEANS  61

W  SWR

SWS

GATE SIGNAL
(GUR,GRU,GUS,GSU,
GVR,GRV,GVS,GSV,
GWR,GRW,GWS,GSW)

62  SECOND
VOLTAGE
DETECTION
MEANS

IL  GATE DRIVING
CIRCUIT  6

BIDIRECTIONAL SWITCH
CONTROL SIGNAL
(CUR,CUS,CVR,CVS,
CWR,CWS)

VDC_FB

VAC_FB

CONTROL BLOCK  63

## FIG.11

```
63  11        71           12        TRANSFORMATION RATIO MI1           14
                                                                    ┌──────────┐
┌────────┐ ┌──────────┐ ┌──────────┐        POLARITY               │FIRST PWM │  PWM
│OUTPUT  │ │AUTOMATIC │ │FIRST     │   DETERMINATION SIGNAL         │COMMAND   │  SIGNAL 1    16
│VOLTAGE │ │VOLTAGE   │ │VOLTAGE   │                                │GENERATION│          ┌──────────┐
│COMMAND │ │REGULA-   │ │COMMAND   │                                │MEANS     │          │SWITCH    │
│OUTPUT  │ │TION MEANS│ │GENERATION│                                └──────────┘  SIGN    │DISTRI-   │
│MEANS   │ │          │ │MEANS     │  ┌──────────┐                                        │BUTION    │
└────────┘ │  Vop     │ └──────────┘  │SECOND    │  STEP-UP                               │MEANS     │
           └──────────┘               │VOLTAGE   │  SWITCHING    ┌──────────┐             │          │
           ┌──────────┐               │COMMAND   │  RATIO MI2    │SECOND PWM│  PWM        │          │
           │AC-DC     │               │GENERATION│              │COMMAND   │  SIGNAL 2   │          │
           │CONVERSION│               │MEANS     │              │GENERATION│             └──────────┘
           │MEANS     │               └──────────┘              │MEANS     │
           └──────────┘                                         └──────────┘
       72    VAC_FB      VDC_FB            13                        15        BIDIRECTIONAL SWITCH
                                                                              CONTROL SIGNAL
                                                                              (CUR,CUS,CVR,CVS,
                                                                              CWR,CWS)
```

*FIG.12*

## FIG.13

THIRD EMBODIMENT

GATE SIGNAL
(GUR,GRU,GUS,GSU,
GVR,GRV,GVS,GSV,
GWR,GRW,GWS,GSW)

BIDIRECTIONAL SWITCH
CONTROL SIGNAL
(CUR,CUS,CVR,CVS,
CWR,CWS)

## FIG.14

FIRST VOLTAGE COMMAND GENERATION MEANS — TRANSFORMATION RATIO MI1 — FIRST PWM COMMAND GENERATION MEANS — PWM SIGNAL 1

OUTPUT CURRENT COMMAND OUTPUT MEANS / 120

AUTOMATIC CURRENT REGULATION MEANS / 121

OUTPUT VOLTAGE DETECTION MEANS / 122

POLARITY DETERMINATION SIGNAL — SIGN

SECOND VOLTAGE COMMAND GENERATION MEANS — STEP-UP SWITCHING RATIO MI2 — SECOND PWM COMMAND GENERATION MEANS — PWM SIGNAL2

SWITCH DISTRI-BUTION MEANS / 16

114  120  121  12  14  16

VAC_FB   IAC_FB   VDC_FB   13   15

BIDIRECTIONAL SWITCH CONTROL SIGNAL (CUR,CUS,CVR,CVS, CWR,CWS)

EP 2 400 650 A2

FIG.15

FIG.16

FOURTH EMBODIMENT

EP 2 400 650 A2

## FIG.17

EP 2 400 650 A2

BIDIRECTIONAL SWITCH
CONTROL SIGNAL
(CUR,CUS,CVR,CVS,
CWR,CWS)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006112275 A